# FASCICULE DE BREVET EUROPEEN

(11) **EP 0 471 598 B1**
(45) Date de publication et mention de la délivrance du brevet: **28.12.1994**
(21) Numéro de dépôt: 91402021.9
(22) Date de dépôt: 19.07.1991
(51) Int. Cl.: A01J 9/04, F25D 31/00

(54) **Procédé et système de stockage et de conservation du lait en vrac dans une cuve**
Verfahren und System zum Lagern und zur Aufbewahrung von loser Milch in einem Behälter
Process and system for storage and conservation of bulk milk in a vessel

(30) Priorité: 14.08.1990 FR 9010321
(43) Date de publication de la demande: 19.02.1992
(73) Titulaire: PROMINOX S.A., 58003 Nevers Cédèx (FR)
(72) Inventeur: Meillan, Jean-Pierre, F-58240 Luthenay-Uxeloup (FR)
(74) Mandataire: Roger-Petit, Georges

(56) Documents cités:
- EP-A- 0 325 523
- FR-A- 1 322 263
- US-A- 1 820 981
- US-A- 2 945 356

## Description

La présente invention concerne un procédé de stockage et de conservation du lait en vrac dans une cuve équipée d'un système de refroidissement direct ou indirect et d'un dispositif d'agitation de type rotatif, ainsi qu'un système de mise en oeuvre du procédé. Un procédé et un système selon le préambule des revendications 1 et 5 sont connus du document FR-A-1322263.

Les systèmes de refroidissement utilisés à ce jour pour stocker et conserver du lait en vrac dans une cuve comprennent généralement un groupe frigorifique dont l'évaporateur est en contact soit avec le lait (cas des systèmes directs), soit avec un fluide intermédiaire circulant entre l'évaporateur et un échangeur en contact avec le lait (cas des systèmes indirects), et un dispositif d'agitation qui plonge dans la cuve.

La présence du dispositif d'agitation s'avère nécessaire pour favoriser l'échange thermique par convection forcée entre le lait et la source de froid, afin d'obtenir un lait homogène en composition (matières grasses, protéines,...) et en température.

Cependant, il est reconnu que la matière grasse du lait est plus sensible aux traitements physiques et physico-chimiques à haute qu'à basse température. Ces traitements dus au dispositif d'agitation et à l'aération du lait lorsque la cuve n'est que partiellement remplie, entraînent un phénomène de lipolyse qui provoque une dégradation de la matière grasse.

Il existe déjà des installations équipées d'une sonde thermostatique placée sur une paroi interne de la cuve ou dans un tube en contact avec le lait, situé à proximité du fond de la cuve où se trouve l'évaporateur, afin d'inhiber le fonctionnement du dispositif d'agitation lorsque la température détectée est supérieure à 20°C environ. Cependant, un tel dispositif n'est pas fiable totalement, car lorsque l'évaporateur n'est que partiellement recouvert et que le dispositif d'agitation n'est pas en fonctionnement, il y a risque de gel du lait ou, au minimum, une nette diminution des performances frigorifiques du système de refroidissement.

Il a été envisagé une autre solution qui consiste à faire fonctionner par intermittence le dispositif d'agitation lorsque la température moyenne du lait à refroidir est supérieure à 20°C environ (EP-A-325523).

Cependant, la demanderesse a constaté à la suite d'expériences que le fait d'arrêter par intermittence l'agitation du lait lorsque sa température est supérieure à 20°C, contrairement au préjugé que l'on pourrait avoir, va en général à l'encontre du résultat désiré. En effet, en l'absence d'agitation, la quantité de lait située à proximité de la source froide placée au fond de la cuve est nécessairement plus froide que la quantité de lait située au-dessus de la source froide. Dans ces conditions, lors de chaque remise en route du dispositif d'agitation, la quantité de lait plus froide est à nouveau réchauffée par suite de son mélange avec la quantité de lait plus chaude. Cette opération éventuellement renouvelée plusieurs fois, a pour résultat une fragilisation des globules gras pouvant entraîner une augmentation du processus de lipolyse, alors que le résultat désiré est au contraire une diminution de ce processus.

L'invention a pour but de pallier ces inconvénients liés au phénomène de lipolyse du lait, et elle propose à cet effet un procédé qui consiste, pendant le temps de refroidissement d'une quantité de lait introduite dans la cuve, à mettre en route le dispositif d'agitation, à le maintenir en fonctionnement tant que la température de conservation du lait n'est pas atteinte, et à commander sa vitesse de rotation à au moins une première vitesse réduite lorsque la température moyenne du lait dans la cuve après introduction de ladite quantité de lait est supérieure à une température T1 et/ou à une seconde vitesse plus élevée lorsque ladite température moyenne est inférieure à la température T1, ladite commande étant fonction de la valeur mesurée d'un paramètre lié à la température moyenne du lait.

D'une manière générale, la température T1 qui constitue le seuil est de l'ordre de 20°C.

Selon le procédé conforme à l'invention, on commande notamment le dispositif d'agitation en prenant comme paramètre la température moyenne du lait ou le niveau atteint par le lait dans la cuve, par exemple.

Pour la mise en oeuvre du procédé, on utilise donc mais non exclusivement un détecteur de température ou un détecteur de niveau. Dans ce dernier cas, suivant que le niveau de remplissage de la cuve est inférieur ou supérieur à un seuil prédéterminé, le dispositif d'agitation est entraîné à la première ou à la deuxième vitesse de rotation, ce seuil correspondant à une température de 20°C pour le lait stocké dans la cuve.

Le fait de pouvoir commander, de préférence d'une manière automatique, le dispositif d'agitation suivant au moins deux vitesses de rotation différentes sans interrompre le fonctionnement du dispositif d'agitation tant que la température de stockage de 4°C environ n'est pas atteinte, permet de lutter efficacement contre le phénomène de lipolyse, sachant qu'une vitesse de rotation unique élevée ne peut donner satisfaction qu'avec une cuve relativement pleine et qu'une vitesse de rotation unique réduite ne peut donner satisfaction qu'avec une cuve partiellement remplie.

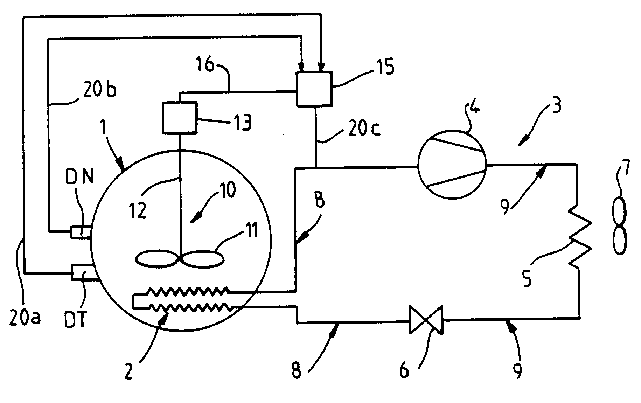

D'autres avantages, caractéristiques et détails de l'invention ressortiront de la description explicative qui va suivre faite en référence à la figure annexée donnée uniquement à titre d'exemple et qui illustre la mise en oeuvre du procédé conforme à l'invention dans le cas d'un système de refroidissement à détente directe et à cycle à compression de vapeur.

Le principe du stockage et de la conservation du lait en vrac dans des cuves consiste à ramener la température moyenne du lait autour de 4°C environ avec des dispositifs de refroidissement direct ou indirect et en présence d'un dispositif d'agitation pour les raisons déjà évoquées et avec les inconvénients mentionnés précédemment.

Conformément à l'invention, le dispositif d'agitation est mis en route et maintenu en fonctionnement continu pendant le temps de refroidissement, c'est-à-dire le temps nécessaire pour refroidir une quantité de lait de sa température initiale à sa température de stockage, y compris la période d'introduction dans la cuve (selon norme ISO 5708-1983 (F)).

Le dispositif d'agitation est le plus souvent constitué par des pales supportées par un axe entraîné à rotation par un moteur à une vitesse prédéterminée, cette vitesse étant toujours la même quelles que soient les conditions de remplissage de la cuve et la température moyenne du lait après chaque introduction dans la cuve.

Selon l'invention, les pales peuvent être entraînées à plusieurs vitesses différentes. Autrement dit, le moteur a au moins deux vitesses de rotation: une première vitesse réduite et une seconde vitesse plus élevée.

D'une manière générale, il faut globalement faire la distinction entre une première quantité de lait résultant d'une première traite introduite dans une cuve vide, et une seconde quantité de lait introduite dans une cuve où est déjà stockée une première quantité de lait refroidie à une température voisine de 4 °C.

Dans le cas d'une première quantité de lait introduite dans la cuve vide, le lait a une température voisine de 35°C, et pendant la première phase de refroidissement, jusqu'à 20°C environ, le dispositif d'agitation est entrainé à la première vitesse de rotation ou vitesse réduite.

Dans le cas d'une seconde quantité de lait introduite dans la cuve toujours à 35°C environ, cette seconde quantité est mélangée à une quantité de lait déjà refroidie à 4°C, ce qui implique que la température moyenne du lait dans la cuve s'abaisse généralement à une température de l'ordre de ou inférieure à 20°C, et pendant le temns de refroidissement jusqu'à la température de stockage de 4°C, le dispositif d'agitation est entraîné à la seconde vitesse de rotation, vitesse qui est conservée pour le refroidissement des autres quantités de lait introduites ultérieurement dans la cuve en fonction de la capacité de celle-ci.

D'une manière générale, bien que la vitesse de rotation puisse être sélectionnée manuellement, il est avantageux que cette sélection se fasse d'une manière automatique en utilisant des moyens techniques classiques dont la mise en oeuvre est à la portée de l'homme de métier.

Dans l'exemple considéré sur la figure, le système de refroidissement est à détente directe et à cycle à compression de vapeur. Le système comprend une cuve 1 dans laquelle est logé un évaporateur 2 relié à un groupe frigorifique 3 à compresseur 4, condenseur 5 et organe de détente 6. Plus précisément, la sortie du compresseur 4 est reliée à l'entrée du condenseur 5 dont la sortie est reliée à l'entrée de l'évaporateur 2 au travers de l'organe de détente 6, la sortie de l'évaporateur 2 étant reliée à l'entrée du compresseur 4. Le condenseur 5 est par exemple refroidi par un ventilateur 7. Un fluide réfrigérant de type R22 circule dans l'évaporateur 2 et dans le groupe frigorifique 3 dans un sens déterminé: compresseur 4, condenseur 5, organe de détente 6, évaporateur 2 et compresseur 4. Il est ainsi défini un circuit fermé constitué par une tuyauterie 8 (circuit basse pression comprenant l'évaporateur 2) entre l'organe de détente 6 et le compresseur 4, et par une tuyauterie 9 (circuit haute pression comprenant le condenseur 5) entre le compresseur 4 et l'organe de détente 6. L'évaporateur 2 est par exemple du type "dimple plate ou à double fond imprimé" formé de deux plaques de tôle délimitant une enceinte en communication avec la tuyauterie 8 et dans laquelle circule le fluide réfrigérant.

Le système de refroidissement est complèté par au moins un dispositif d'agitation 10 comprenant des pales 11 situées à l'intérieur de la cuve 1 et montées à rotation à l'extrémité d'un axe 12 entraîné par un moteur 13 relié à un dispositif de commande classique 15.

Selon une première mise en oeuvre du procédé conforme à l'invention, un détecteur de température DT est monté au contact extérieur de la cuve 1 sensiblement au niveau de l'évaporateur 2. Ce détecteur de température DT est relié au dispositif de commande 15 par une liaison électrique 20a.

Lorsque la cuve 1, initialement vide, reçoit une première quantité de lait issue d'une première traite par exemple, la température du lait est d'environ 35°C. Dès cette température détectée, le détecteur de température DT pilote le dispositif de comande 15 pour entrainer en rotation les pales 11 du dispositif d'agitation 10 à une première vitesse réduite. Cette première vitesse peut être maintenue pendant le temps de refroidissement, c'est-à-dire jusqu'à ce que le lait atteigne la température de stockage de 4°C environ, mais lorsque la température moyenne du lait devient inférieure à 20°C, le dispositif de commande 15 entraîne avantageusement le dispositif d'agitation 10 à une deuxième vitesse de rotation. Lors de l'introduction d'une nouvelle quantité de lait à 35°C environ dans la cuve 1, cette quantité de lait se flange à du lait à 4°C, ce qui fait que la température moyenne descend au voisinage de 20°C environ. Dans ces conditions, le détecteur DT pilote le dispositif de commande 15 pour entraîner en rotation les pales 11 du dispositif d'agitation 10 à la seconde vitesse plus élevee que la précédente pendant toute la période de refroidissement.

Selon une seconde mise en oeuvre du procédé conforme à l'invention, le détecteur de température DT est remplacé par un détecteur de niveau DN relié au dispositif de commande 15 par une liaison électrique 20b. Le principe de fonctionnement reste le même que dans le cas du détecteur de température, le seuil étant cette fois-ci constitué par le niveau de remplissage de la cuve. Si le niveau de la quantité de lait stockée dans la cuve 1 est inférieur à ce niveau, les pales 11 du dispositif d'agitation 10 sont entraînées à la première vitesse de rotation et, dans le cas contraire, à la seconde vitesse de rotation.

Avec un détecteur de niveau, la première vitesse de rotation est normalement maintenue pendant toute la période de refroidissement d'une première quantité de lait introduite dans la cuve.

Selon une troisième mise en oeuvre du procédé conforme à l'invention, le dispositif de commande 15 est du type pressostatique piloté par la pression règnant dans le circuit basse pression de la tuyauterie 8, et il est relié à celle-ci par une liaison 20c dont la nature est fonction du type de dispositif pressostatique utilisé. Dans l'exemple considéré ici, la liaison 17 est raccordée sur la tuyauterie 8 après l'évaporateur 2, en amont du compresseur 4.

Dans ce cas, le dispositif 15 est commandé en pression par rapport à une pression de référence. Si la pression dans le circuit basse pression est supérieure à la pression de référence, les pales 11 du dispositif d'agitation 10 sont entraînées à la première vitesse de rotation et, dans le cas contraire, à la seconde vitesse.

Enfin, selon une dernière mise en oeuvre du procédé conforme à l'invention, il est possible d'utiliser un dispositif de comande 15 à temporisation qui réagit en fonction du temps écoulé depuis le début de la période de refroidissement dans le cas d'une première quantité de lait introduite dans la cuve. Après un temps de fonctionnement t1 à la première vitesse de rotation, le dispositif d'agitation 10 est commandé à la seconde vitesse. Bien entendu, dans le cas d'une cuve déjà partiellement remplie, le dispositif d'agitation 10 est commandé à la deuxième vitesse de rotation, la temporisation n'étant pas activée.

Dans tous les cas, lorsque la température moyenne du lait stocké dans la cuve a atteint sa température de conservation (4°C environ), le dispositif d'agitation 10 fonctionne périodiquement dans le but de maintenir le lait homogène. Si la cuve n'est que partiellement remplie, on utilise la première vitesse de rotation et dans le cas contraire la seconde vitesse plus élevée.

Dans les différents exemples considérés ici, le dispositif d'agitation peut être commandé à deux vitesses différentes. Bien entendu, le passage de la première à la seconde vitesse peut s'effectuer d'une façon progressive par l'intermédiaire d'un variateur électronique de vitesse, et on peut envisager plusieurs vitesses de rotation.

L'invention n'est pas limitée aux exemples précités décrits uniquement à titre d'exemples, et comprend tous les équivalents techniques permettant de mettre en oeuvre le procédé conforme à l'invention. En particulier, le dispositif d'agitation 10 peut comprendre plusieurs agitateurs dont l'un peut avoir une vitesse de rotation constante et l'autre une vitesse de rotation variable, dont les deux ont une vitesse de rotation variable, etc... Enfin, il est bien évident que le procédé conforme à l'invention s'applique également à un système de refroidissement indirect.

## Revendications

1. Procédé de stockage et de conservation du lait en vrac dans une cuve équipée d'un système de refroidissement direct ou indirect et d'un dispositif d'agitation de type rotatif, qui consiste, pendant le temps de refroidissement d'une quantité de lait introduite dans la cuve, à mettre en route le dispositif d'agitation, à le maintenir en fonctionnement tant que la température de conservation du lait n'est pas atteinte, caractérisé en ce qu'il consiste à commander la vitesse de rotation dudit dispositif à une première vitesse réduite lorsque la température moyenne du lait dans la cuve après introduction de ladite quantité de lait est supérieure à une valeur (T1) et à une seconde vitesse plus élevée lorsque ladite température moyenne du lait est inférieure à ladite valeur (T1), ladite commande est en fonction de la valeur mesurée d'un paramètre lié à la température moyenne du lait.

2. Procédé selon la revendication 1, caractérisé en ce qu'il consiste à mesurer la température moyenne du lait et à commander la vitesse de rotation du dispositif d'agitation à la première ou à la deuxième vitesse de rotation suivant que cette température est supérieure ou inférieure à ladite valeur (T1).

3. Procédé selon la revendication 1, caractérisé en ce qu'il consiste à détecter le niveau de remplissage de la cuve et à commander la vitesse de rotation du dispositif d'agitation à la première ou à la deuxième vitesse de rotation suivant que ce niveau est inférieur ou supérieur à un seuil prédéterminé.

4. Procédé selon la revendication 1, caractérisé en ce qu'il consiste, lors de l'introduction d'une première quantité de lait dans la cuve, à commander le dispositif d'agitation à la première vitesse et, après un temps prédéterminé, à la seconde vitesse de rotation.

5. Système de stockage et de conservation du lait en vrac dans une cuve pour la mise en oeuvre du procédé tel que défini dans la revendication 1, du type comprenant un groupe de refroidissement et un dispositif d'agitation du lait de type rotatif, caractérisé en ce qu'il comprend un dispositif de commande (15) du dispositif d'agitation (10) à une première vitesse et une seconde vitesse de rotation lorsque la température moyenne du lait est supérieure ou inférieure à une valeur (T1), et des moyens de détection pour mesurer la valeur d'un paramètre lié à la température moyenne du lait afin de piloter le dispositif de commande (15).

6. Système selon la revendication 5, caractérisé en ce que les moyens de détection sont constitués par un détecteur de température (DT).

7. Système selon la revendication 5, caractérisé en ce que les moyens de détection sont constitués par un détecteur de niveau (DN).

8. Système selon la revendication 5, caractérisé en ce que le dispositif de commande (15) comprend une temporisation telle que lors de l'introduction d'une première quantité de lait, le dispositif d'agitation (10) est commandé à la seconde vitesse de rotation après un temps prédéterminé.

9. Système selon la revendication 5, caractérisé en ce que le dispositif de commande (15) est un dispositif pressostatique.

10. Système selon l'une quelconque des revendications 5 à 9, caractérisé en ce que le groupe de refroidissement est du type direct ou indirect.

## Claims

1. Process for the bulk storage and preservation of milk in a tank equipped with a direct or indirect cooling system and with a rotary type of stirring device, which consists, during the cooling time of a quantity of milk introduced into the tank, in switching on the stirring device, keeping it in operation as long as the preservation temperature of the milk has not been reached, characterized in that it consists in controlling the speed of rotation of said device with a first reduced speed when the average temperature of the milk in the tank after introduction of the said quantity of milk is higher than a value (T1), and with a second higher speed when the said average temperature of the milk is lower than the said value (T1), the said control depending on the measured value of a parameter associated with the average temperature of the milk.

2. Process according to Claim 1, characterized in that it consists in measuring the average temperature of the milk and in controlling the speed of rotation of the stirring device at the first or the second speed of rotation, depending on whether this temperature is higher or lower than the said value (T1).

3. Process according to Claim 1, characterized in that it consists in detecting the filling level of the tank and in controlling the speed of rotation of the stirring device at the first or the second speed of rotation, depending on whether this level is lower or higher than a preset threshold.

4. Process according to Claim 1, characterized in that it consists, during the introduction of a first quantity of milk into the tank, in controlling the stirring device at the first speed and, after a preset time interval, at the second speed of rotation.

5. System for the bulk storage and preservation of milk in a tank for the implementation of the process as defined in Claim 1, of the type comprising a refrigeration unit and a milk stirring device of the rotary type, characterized in that it includes a control device (15) for controlling the stirring device (10) with a first speed and a second speed of rotation when the average temperature of the milk is higher or lower than a value (T1), and means of detection to measure the value of a parameter associated with the average temperature of the milk in order to actuate the control device (15).

6. System according to Claim 5, characterized in that the means of detection consists of a temperature detector (DT).

7. System according to Claim 5, characterized in that the means of detection consists of a level detector (DN).

8. System according to Claim 5, characterized in that the control device (15) includes a time lag such as, during the introduction of a first quantity of milk, the stirring device (10) is operated at the second speed of rotation after a preset time interval.

9. System according to Claim 5, characterized in that the control device (15) is a pressure-sensitive device.

10. System according to any one of Claims 5 to 9, characterized in that the refrigeration unit is of the direct or the indirect type.

## Patentansprüche

1. Verfahren zum Lagern und Frischhalten von loser Milch in einem mit einem direkten oder indirekten Kühlsystem und mit einer Rühreinrichtung vom drehenden Typ ausgestatteten Behälter, welches während der Kühlzeit einer in den Behälter zugeführten Milchmenge darin besteht, die Rühreinrichtung hochzufahren und sie in Betrieb zu halten, solange die Frischhaltetemperatur der Milch nicht erreicht ist, dadurch gekennzeichnet, daß es darin besteht, die Drehgeschwindigkeit der besagten Einrichtung mit einer ersten geringeren Geschwindigkeit zu steuern, wenn die mittlere Temperatur der Milch in dem Behälter nach Zufuhr der besagten Michmenge über einem Wert (T1) liegt, und mit einer zweiten höheren Geschwindigkeit, wenn die besagte mittlere Temperatur der Milch unter dem besagten Wert (T1) liegt, wobei die besagte Steuerung von dem gemessenen Wert eines Parameters abhängt, der mit der mittleren Temperatur der Milch verknüpft ist.

2. Verfahren nach Anspruch 1, dadurch gekennzeichnet, daß es darin besteht, die mittlere Temperatur der Milch zu messen und die Drehgeschwindigkeit der Rühreinrichtung mit der ersten oder zweiten Geschwindigkeit zu steuern, je nachdem ob diese Temperatur über oder unter dem besagten Wert (T1) liegt.

3. Verfahren nach Anspruch 1, dadurch gekennzeichnet, daß es darin besteht, die Füllhöhe des Behälters zu bestimmen und die Drehgeschwindigkeit der Rühreinrichtung mit der ersten oder zweiten Geschwindigkeit zu steuern, je nachdem ob diese Höhe unter oder über einer vorbestimmten Schwelle liegt.

4. Verfahren nach Anspruch 1, dadurch gekennzeichnet, daß es darin besteht, nach der Zufuhr einer ersten Milchmenge in den Behälter die Rühreinrichtung mit der ersten Geschwindigkeit zu steuern und nach einem vorbestimmten Zeitraum mit der zweiten Drehgeschwindigkeit.

5. Einrichtung zum Lagern und Frischhalten von loser Milch in einem Behälter zur Durchführung des Verfahrens nach Anspruch 1, von derjenigen Art, die eine Kühlgruppe und eine Rühreinrichtung vom drehenden Typ für die Milch umfaßt, dadurch gekennzeichnet, daß sie eine Steuereinrichtung (15) der Rühreinrichtung (10) umfaßt, mit einer ersten Drehgeschwindigkeit und einer zweiten Drehgeschwindigkeit, wenn die mittlere Temperatur der Milch über oder unter einem Wert (T1) liegt, sowie Erfassungseinrichtungen, um den Wert eines Parameters zu messen, der mit der mittleren Temperatur der Milch verknüpft ist, um die Steuereinrichtung (15) zu lenken.

6. Einrichtung nach Anspruch 5, dadurch gekennzeichnet, daß die Erfassungseinrichtungen von einem Temperatursensor (DT) gebildet werden.

7. Einrichtung nach Anspruch 5, dadurch gekennzeichnet, daß die Erfassungseinrichtungen von einem Pegelsensor (DN) gebildet werden.

8. Einrichtung nach Anspruch 5, dadurch gekennzeichnet, daß die Steuereinrichtung (15) eine Verzögerung umfaßt, so daß nach der Zufuhr einer ersten Milchmenge die Rühreinrichtung (10) nach einem vorbestimmten Zeitraum mit der zweiten Drehgeschwindigkeit gesteuert wird.

9. Einrichtung nach Anspruch 5, dadurch gekennzeichnet, daß die Steuereinrichtung (15) eine Druckregeleinrichtung ist.

10. Einrichtung nach einem beliebigen der Ansprüche 5 bis 9, dadurch gekennzeichnet, daß die Kühlgruppe vom direkten oder indirekten Typ ist.
